# EUROPÄISCHE PATENTSCHRIFT

(11) **EP 0 839 617 B1**
(45) Veröffentlichungstag und Bekanntmachung des Hinweises auf die Patenterteilung: **15.05.2002**
(21) Anmeldenummer: 97115856.3
(22) Anmeldetag: 12.09.1997
(51) Int. Cl.: B28B 11/04, B05C 13/00, B65G 47/91

(54) **Rundtisch-Glasiermaschine**
Glazing device with turn-table
Dispositif d'émaillage avec table tournante

(30) Priorität: 04.11.1996 DE 19652518; 09.01.1997 DE 19700491
(43) Veröffentlichungstag der Anmeldung: 06.05.1998
(73) Patentinhaber: Maschinen- und Stahlbau Julius Lippert GmbH & Co., D-92690 Pressath (DE)
(72) Erfinder: Sper, Gerold, 92711 Parkstein (DE); Speer, Alois, 92648 Vohenstrauss (DE); Zeis, Hans, 92711 Parkstein (DE); Voit, Karl, 95163 Weissenstadt (DE)
(74) Vertreter: LOUIS, PÖHLAU, LOHRENTZ & SEGETH

(56) Entgegenhaltungen:
- EP-A- 0 341 387
- DE-A- 2 247 322
- US-A- 3 837 472
- US-A- 3 951 272

## Beschreibung

Die Erfindung betrifft eine Rundtisch-Glasiermaschine für Ton- und Porzellanwaren gemäß dem Oberbegriff des Anspruchs 1.

Eine derartige Rundtisch-Glasiermaschine ist bspw. aus der EP 0 341 387 B1 bzw. aus der dazu parallelen DE 38 15 822 C2 bekannt. Bei einer solchen bekannten Rundtisch-Glasiermaschine sind die lineare Zufuhr-Fördereinrichtung und die lineare Abfuhr-Fördereinrichtung derart orientiert, daß sie miteinander einen Winkel einschließen, der entsprechend dem Winkel zwischen der Übergabestation und der Abnahmestation von 180 Winkelgrad verschieden ist. Bei der Integration einer solchen bekannten Rundtisch-Glasiermaschine in automatisierte Fertigungsabläufe, d.h. zur Verknüpfung der linearen Zufuhr-Fördereinrichtung mit der linearen Abfuhr-Fördereinrichtung sind hier also Kurvenfördereinrichtungen erforderlich. Das wird als Mangel angesehen.

Aus der DE-PS 14 59 395 ist eine Rundtisch-Glasiermaschine bekannt, die ein linear und tangential zum Rundtisch verlaufendes Zu- und Abführband aufweist. Der Rundtisch bewegt sich mit seinen Artikelaufnehmern, die stationsartig beabstandet angeordnet sind, kontinuierlich im Kreis. Mittels sternförmig ausgebildeter Aufgeber und Abgeber, deren Drehachse parallel zu der des Rundtisches liegt, werden die Artikel zu- bzw. abgeführt.

Eine ähnliche Rundtisch-Glasieranlage mit linear angeordneter Zu- und Abfördereinrichtung ist aus der DE-AS 22 47 322 bekannt.

Der Erfindung liegt die Aufgabe zugrunde, eine Rundtisch-Glasiermaschine der eingangs genannten Art zu schaffen, bei welcher auf eine Kurvenfördereinrichtung verzichtet werden kann, so daß die Integration der Rundtisch-Glasiermaschine in automatisierte Fertigungsabläufe problemlos möglich ist.

Diese Aufgabe wird bei einer Rundtisch-Glasiermaschine der eingangs genannten Art erfindungsgemäß durch die Merkmale des Kennzeichenteiles des Anspruchs 1 gelöst. Weiterbildungen der erfindungsgemäßen Rundtisch-Glasiermaschine sind in den Unteransprüchen gekennzeichnet.

Durch die Ausbildung jeder Umsetzeinrichtung, die um eine zugehörige, zur Drehachse des Drehkreuzes parallele Achse verschwenkbar ist, ist es problemlos möglich, die Zufuhr-Fördereinrichtung und die Abfuhr-Fördereinrichtung in einer Linie anzuordnen, obwohl die Übergabestation und die Abnahmestation der Rundtisch-Glasiermaschine miteinander einen von einem gestreckten Winkel verschiedenen Winkel einschließt.

Dadurch, daß bei der erfindungsgemäßen Rundtisch-Glasiermaschine die von der Zufuhr-Fördereinrichtung und von der Abfuhr-Fördereinrichtung gebildete Linie zur Winkelhalbierenden des Winkels zwischen der Übergabestation und der Abnahmestation senkrecht orientiert ist, und dadurch, daß die zur Übergabestation und die zur Abnahmestation jeweils zugehörige Umsetzeinrichtung um den halben Winkel des Winkels zwischen der Übergabe- und der Abnahmestation verschwenkbar ist, wobei die Achse der jeweiligen Umsetzeinrichtung die Linie aus Zufuhr- und Abfuhrfördereinrichtung kreuzt, führen die beiden gleich ausgebildeten Umsetzeinrichtungen zeitlich aufeinander passend abgestimmte Schwenkbewegungen um den gleichen Schwenkwinkel aus. Dieser Schwenkwinkel ist also dem halben Winkel zwischen der Übergabestation und der Abnahmestation in bezug auf die Drehachse des Drehkreuzes gleich.

Bei der erfindungsgemäßen Rundtisch-Glasiermaschine weist die zur Übergabestation zugeordnete Umsetzeinrichtung und die zur Abnahmestation zugeordnete Umsetzeinrichtung jeweils einen Schwenkarm mit mindestens einem Werkstückhalter auf, der als Saugkopf ausgebildet sein kann. Zur Erzielung einer gewünschten Produktivität der erfindungsgemäßen Rundtisch-Glasiermaschien ist es bevorzugt, wenn jeder Schwenkarm mehrere Werkstückhalter aufweist, so daß gleichzeitig eine der Anzahl Werkstückhalter entsprechende Anzahl Ton- und Porzellanwaren manipulierbar ist.

Jeder Schwenkarm ist mit einer zugehörigen Antriebseinrichtung verbunden, um den entsprechenden Schwenkarm um seine zugehörige Achse wunschgemäß verschwenken zu können. Die entsprechende Antriebseinrichtung kann einen Elektromotor oder eine Hydraulik- oder Pneumatikeinrichtung aufweisen.

Erfindungsgemäß sind zwischen der Übergabestation und der Abnahmestation eine Glasierstation, eine Abtropfstation sowie mindestens eine Trockenstation vorgesehen. Der Abnahmestation kann eine Wasch- und Nachfüllstation für den mindestens einen Werkstückhalter zugeordnet sein. Entsprechend der Anzahl Trockenstationen wird die Taktzeit bzw. der Schritt-Verstellwinkel des Drehkreuzes eingestellt, wobei die Taktzeiten bzw. der Verstellwinkel zur Anzahl Trockenstationen umgekehrt proportional ist.

Ausbildungen der erfindungsgemäßen Rundtisch-Glasiermaschine sind in der Zeichnung schematisch dargestellt und werden nachfolgend beschrieben. Es zeigen:
- Fig. 1: in einer abstrahierten Darstellung eine Ausbildung der Rundtisch-Glasiermaschine, bei welcher die von der Zufuhr-Fördereinrichtung und von der Abfuhr-Fördereinrichtung gebildete Linie zur Winkelhalbierenden zwischen der Übergabestation und der Abnahmestation senkrecht orientiert ist,
- Fig. 2: eine Ausbildung der Rundtisch-Glasiermaschine entsprechend dem Schema gemäß Fig. 1, wobei das Drehkreuz nacheinander fünf Stationen durchläuft, und
- Fig. 3: in einer der Fig. 2 ähnlichen Darstellung eine Ausbildung der Rundtisch-Glasiermaschine, wobei das Drehkreuz nacheinander vier Stationen durchläuft.

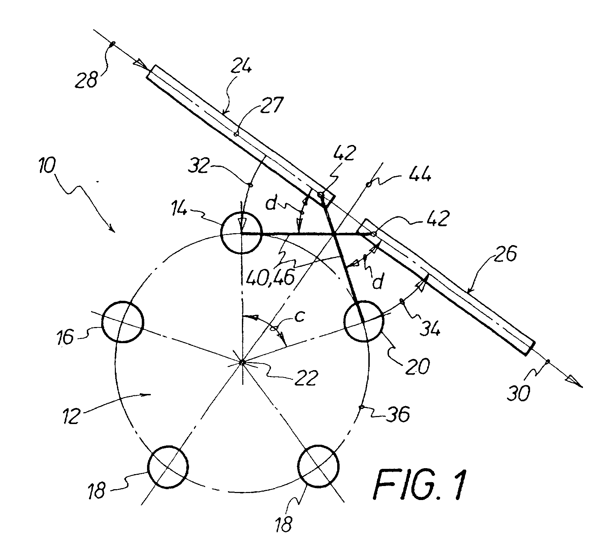

Fig. 1 zeigt schematisiert eine Ausbildung der Rundtisch-Glasiermaschine 10 für Ton- und Porzellanwaren, die ein Drehkreuz 12 aufweist. Das Drehkreuz 12 ist von einer Übergabestation 14 zu einer Abtropfstation 16 verstellbar. An die Abtropfstation 16 schließen sich bei der in Fig. 1 schematisch angedeuteten Ausbildung der Rundtisch-Glasiermaschine 10 zwei Trockenstationen 18 an. Auf die letzte Trockenstation 18 folgt eine Abnahmestation 20, die mit einer Wasch- und Nachfüllstation kombiniert ist.

Das Drehkreuz 12 ist um eine Drehachse 22 schrittweise zwischen den genannten Stationen 14 bis 20 verstell- d.h. verdrehbar.

Die Übergabestation 14 und die Abnahmestation 20 schließen miteinander in bezug auf die Drehachse 22 einen Winkel c ein.

Der Übergabestation 14 ist eine lineare Zufuhr-Fördereinrichtung 24 zugeordnet. Der Abnahmestation 20 ist eine lineare Abfuhr-Fördereinrichtung 26 zugeordnet. Die Zufuhr-Fördereinrichtung 24 und die Abfuhr-Fördereinrichtung 26 sind in einer Linie 27 hintereinander angeordnet. Die Zufuhr-Richtung für zu glasierende Ton- und Porzellanwaren ist durch den Pfeil 28 und die Abfuhrrichtung für glasierte Ton- und Porzellanwaren ist durch den Pfeil 30 verdeutlicht.

Zwischen der linearen Zufuhr-Fördereinrichtung 24 und der Übergabestation 14 ist eine Übergabeeinrichtung vorgesehen, die durch den bogenförmigen Pfeil 32 schematisch angedeutet ist. Zwischen der Abnahmestation 20 und der linearen Abfuhrfördereinrichtung 26 ist eine Abnahmeeinrichtung vorgesehen, die in Fig. 1 durch den bogenförmigen Pfeil 34 angedeutet ist.

Zwischen der Übergabestation 14 und der Abnahmestation 20 verläuft mittig in radialer Richtung, ausgehend von der Drehachse 22, die gedachte Winkelhalbierende 44. Seitlich neben der Bahn 36 des Drehkreuzes 12 und von dieser beabstandet ist die lineare Zufuhr-Fördereinrichtung 24 und die lineare Abfuhr-Fördereinrichtung 26 vorgesehen.

Die Übergabeeinrichtung 32 und die Abnahmeeinrichtung 34 sind gleich ausgebildet, d.h. diese beiden Einrichtungen 32 und 34 sind jeweils von einer Umsetzeinrichtung 40 gebildet, die jeweils um eine zugehörige zur zentralen Drehachse 22 parallele Achse 42 um einen Winkel d verschwenkbar sind, für den die Beziehung gilt: d = c:2.

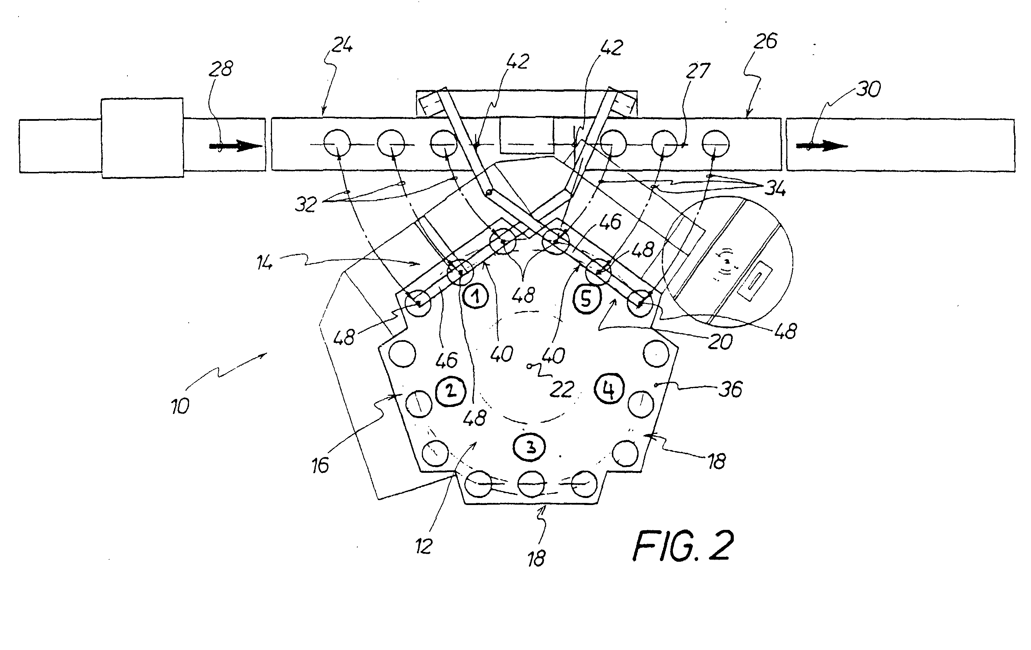

Fig. 2 zeigt in einer Ansicht von oben eine Ausbildung der Rundtisch-Glasiermaschine 10 mit fünf Stationen des Drehkreuzes 12, wobei die mit der Nr. 1 bezeichnete Übergabestation 14 und eine lineare Zufuhr-Fördereinrichtung 24 einander mittels einer durch die Pfeile 32 angedeuteten Übergabeeinrichtung zugeordnet sind. Entsprechend sind die durch die Nr. 5 bezeichnete Abnahmestation 20 und die lineare Abfuhr-Fördereinrichtung 26 einander durch eine Abnahmeeinrichtung zugeordnet, die durch die bogenförmigen Pfeile 34 angedeutet ist. Die lineare Zufuhr-Fördereinrichtung 24 und die lineare Abfuhr-Fördereinrichtung 26 sind in einer Linie 27 nacheinander angeordnet. Der Pfeil 28 verdeutlicht auch in dieser Zeichnungsfigur die Zufuhrrichtung für zu glasierende Ware und der Pfeil 30 die Abfuhrrichtung für glasierte Ware.

Die Übergabeeinrichtung 32 und die Abnahmeeinrichtung 34 weisen jeweils eine Umsetzeinrichtung 40 auf, die mit einem Schwenkarm 46 versehen ist. An jedem der beiden Schwenkarme 46 sind drei Werkstückhalter 48 vorgesehen. Die Werkstückhalter 48 können von Saugköpfen gebildet sein. Die Umsetzeinrichtungen 40 bzw. die beiden Schwenkarme 46 sind jeweils um eine Achse 42 verschwenkbar, die zur zentralen Drehachse 22 des Drehkreuzes 12 parallel orientiert sind. Die Achsen 42 kreuzen die Linie 27 in einem rechten Winkel.

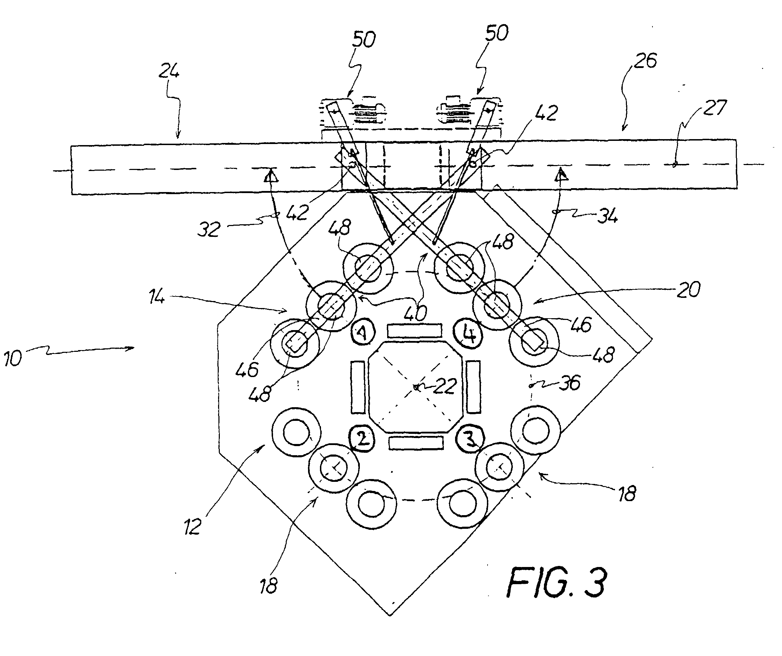

Fig. 3 zeigt eine Ausbildung der Rundtisch-Glasiermaschine 10 mit einem Drehkreuz 12, das zwischen vier Stationen schrittweise um die zentrale Drehachse 22 verstellbar ist. Diese vier Stationen sind mit den Nummern 1 bis 4 bezeichnet. Auch die Fig. 3 zeigt zwei Umsetzeinrichtungen 40, die jeweils einen Schwenkarm 46 aufweisen, die um zugehörige Achsen 42 verschwenkbar sind. Zu diesem Zwecke ist jeder Schwenkarm 46 mit einer zugehörigen Antriebseinrichtung 50 verbunden.

## Patentansprüche

1. Rundtisch-Glasiermaschine für Ton- und Porzellanwaren mit einem Drehkreuz (12), das schrittweise von einer Übergabestation (14) zu einer mit dieser in bezug auf die Drehachse (22) des Drehkreuzes (12) einen bestimmten Winkel (a;c) einschließenden Abnahmestation (20) verstellbar ist, wobei zur Übergabestation (14) eine lineare Zufuhr-Fördereinrichtung (24) und zur Abnahme-Station (20) eine lineare Abfuhr-Fördereinrichtung (26) benachbart ist, und zwischen der Übergabestation (14) und der Zufuhr-Fördereinrichtung (24) eine Übergabeeinrichtung (32) und zwischen der Abnahmestation (20) und der Abfuhr-Fördereinrichtung (26) eine Abnahmeeinrichtung (34) vorgesehen ist,
**dadurch gekennzeichnet .**
**daß** die Zufuhr-Fördereinrichtung (24) und die Abfuhr-Fördereinrichtung (26) in einer Linie (27) nacheinander angeordnet sind, daß die Übergabeeinrichtung (32) und die Abnahmeeinrichtung (34) als um eine zur Drehachse (22) des Drehkreuzes (12) parallele Achse (42) verschwenkbare Umsetzeinrichtung (40) ausgebildet sind, deren Schwenkwinkel (b;d) an den Winkel (c) zwischen der Übergabestation (14) und der Abnahmestation (20) angepaßt ist, wobei die von der Zufuhr-Fördereinrichtung (24) und von der Abfuhr-Fördereinrichtung (26) gebildete Linie (27) zur Winkelhalbierenden (44) des Winkels (c) zwischen der Übergabestation (14) und der Abnahmestation (20) senkrecht orientiert ist, und daß die zur Übergabestation (14) und die zur Abnahmestation (20) jeweils zugehörige Umsetzeinrichtung (40) um den halben Winkel (d) des Winkels (c) zwischen der Übergabe- und der Abnahmestation (14, 20) verschwenkbar ist, wobei die Achse (42) der jeweiligen Umsetzeinrichtung (40) die Linie (27) aus Zufuhr- und Abfuhr-Fördereinrichtung (24, 26) kreuzt, und die Umsetzeinrichtung (40) der Übergabestation (14) und der Abnahmestation (20) jeweils einen Schwenkarm (46) mit mindestens einem Werkstückhalter (48) aufweist.

2. Rundtisch-Glasiermaschine nach Anspruch 1,
**dadurch gekennzeichnet.**
**daß** jeder Schwenkarm (46) mit einer zugehörigen Antriebseinrichtung (50) verbunden ist.

3. Rundtisch-Glasiermaschine nach Anspruch 1 oder 2,
**dadurch gekennzeichnet.**
**daß** zwischen der Übergabe- und der Abnahmestation (14, 20) eine Glasier- und Abtropfstation (16) und mindestens eine Trockenstation (18) vorgesehen und der Abnahmestation (20) eine Wasch- und Nachfüllstation für den mindestens einen Werkstückhalter (48) zugeordnet ist

## Claims

1. Rotary-table glazing machine for pottery and porcelain ware, having a turnstile (12) which can be adjusted progressively from a delivery station (14) to a take-off station (20) enclosing a certain angle (a; c) with the latter with respect to the rotational axis (22) of the turnstile (12), a linear feed conveying device (24) being adjacent to the delivery station (14) and a linear discharge conveying device (26) being adjacent to the take-off station (20), and a delivery device (32) being provided between the delivery station (14) and the feed conveying device (24), and a take-off device (34) being provided between the take-off station (20) and the discharge conveying device (26), **characterized in that** the feed conveying device (24) and the discharge conveying device (26) are arranged one after the other in a line (27), **in that** the delivery device (32) and the take-off device (34) are designed as a transfer device (40) which is pivotable about an axis (42) parallel to the rotational axis (22) of the turnstile (12) and the pivoting angle (b; d) of which is adapted to the angle (c) between the delivery station (14) and the take-off station (20), the line (27) formed by the feed conveying device (24) and by the discharge conveying device (26) being oriented perpendicularly to the angle bisector of the angle (c) between the delivery station (14) and the take-off station (20), and **in that** the respective transfer device (40) belonging in each case to the delivery station (14) and the take-off station (20) can be pivoted by the half angle (d) of the angle (c) between the delivery station (14) and the take-off station (20), the axis (42) of the respective transfer device (40) intersecting the line (27) of the feed and delivery conveying devices (24, 26), and the transfer device (40) of the delivery station (14) and the take-off station (20) in each case having a pivoted arm (46) with at least one work holder (48).

2. Rotary-table glazing machine according to Claim 1, **characterized in that** each pivoted arm (46) is connected to an associated drive device (50).

3. Rotary-table glazing machine according to Claim 1 or 2, **characterized in that** a glazing and dripping station (16) and at least one drying station (18) are provided between the delivery and take-off stations (14, 20), and a washing and refilling station for the at least one work holder (48) is assigned to the take-off station (20).

## Revendications

1. Machine à émailler à table rotative pour objets en terre et en porcelaine, du type comportant une croix tournante (12) qui peut être réglée pas à pas depuis une station de délivrance (14) jusqu'à une station d'enlèvement (20), formant un angle déterminé (a ; c) par rapport à l'axe de rotation (22) de la croix tournante (12), un dispositif pour l'amenée linéaire (24) à la station de délivrance (14) étant voisin d'un dispositif pour l'évacuation linéaire (26) de la station d'enlèvement (20), entre la station de délivrance (14) et le dispositif d'amenée (24) étant prévu un dispositif de livraison (32), et, entre la station d'enlèvement (20) et le dispositif d'évacuation (24) étant prévu un dispositif d'enlèvement (34), **caractérisée en ce que** le dispositif d'amenée linéaire (24) et le dispositif d'évacuation linéaire (26) sont disposés alignés l'un après l'autre, **en ce que** le dispositif de livraison (32) et le dispositif d'enlèvement (34) sont constitués par un dispositif de séparation (40), pouvant basculer autour d'un axe (42) parallèle) à l'axe de rotation (22) de la croix tournante (12), leur axe de basculement (b ; d) étant adapté à l'angle (c) formé entre la station de délivrance (14) et la station d'enlèvement (20), la ligne (27) formée par le dispositif d'amenée linéaire (24) et le dispositif d'évacuation linéaire (26) étant orientée verticalement par rapport à la bissectrice d'angle (44) de l'angle (c) formé entre la station de délivrance (14) et la station d'enlèvement (20), et **en ce que** le dispositif de séparation (40) correspondant à chacune de la station de délivrance (14) et de la station d'enlèvement (20) peut basculer de la moitié (d) de l'angle (c) formé entre la station de délivrance (14) et la station d'enlèvement (20), l'axe de chaque dispositif de séparation (40) recoupant la ligne d'alignement des dispositifs d'amenée linéaire (24) et d'évacuation linéaire (26), et le dispositif de séparation (40) de la station de délivrance (14) et celui de la station d'enlèvement (20) présentent chacun un bras basculant (46) avec au moins un porte-pièce (48).

2. Machine à émailler à table rotative selon la revendication 1, **caractérisée en ce que** chaque bras basculant (46) est relié avec un dispositif d'entraînement correspondant (50).

3. Machine à émailler à table rotative selon les revendications 1 ou 2, **caractérisée en ce que**, entre la station de délivrance (14) et la station d'enlèvement (20) est prévue une station d'émaillage et d'égouttage (16) et au moins une station de séchage (18), et la station d'enlèvement (20) comporte une station de lavage et de recharge pour au moins un porte-pièce (48).
